# EUROPÄISCHE PATENTSCHRIFT

(11) **EP 0 951 124 B1**
(45) Veröffentlichungstag und Bekanntmachung des Hinweises auf die Patenterteilung: **11.06.2003**
(21) Anmeldenummer: 99250118.9
(22) Anmeldetag: 14.04.1999
(51) Int. Cl.: H02G 5/04, B60M 5/00

(54) **Stromeinspeisung für längsgeschlitze Schleifleitungen**
Currect supply for slotted line
Alimentation électrique pour ligne de contact fendue

(30) Priorität: 17.04.1998 DE 19817934
(43) Veröffentlichungstag der Anmeldung: 20.10.1999
(73) Patentinhaber: Demag Cranes & Components GmbH, 58300 Wetter (DE)
(72) Erfinder: Lichtenvort, Uwe, 45239 Essen (DE); Schulte, Uwe, 58300 Wetter (DE); Oemus, Klaus-Dieter, Ing., 58675 Hemer (DE); Kohlenberg, Thomas, Dipl.-Ing., 58300 Wetter (DE); Röhr, Michael, Dipl.-Ing., 44265 Dortmund (DE)
(74) Vertreter: Moser, Jörg Michael, Dipl.-Ing.

(56) Entgegenhaltungen:
- US-A- 3 337 697
- US-A- 3 957 142
- US-A- 4 090 594

## Beschreibung

Die Erfindung betrifft eine Stromeinspeisung für längsgeschlitzte Schleifleitungen gemäß dem Anspruch 1. Aus der US 3337697 ist eine Stromeinspeisung für längsgeschlitzte Schleifleitungen bekannt, bei der die Schleifleitung ein Kunststofflängsprofil mit einer Öffnung aufweist, durch die eine Anschlußklemme mit der Ader eines mehradrigen Kabels verbindbar ist, wobei der Einspeisungsbereich von einem Isoliergehäuse umgeben ist. Femer ist hierbei eine Anschlußfahne vorgesehen, die sich vertikal nach oben bis in den Bereich oberhalb des Kunststoffprofils erstreckt.

Gemäß der US 4090594 kann eine solche Anschlußfahne auch flach ausgebildet sein.

Aus dem Prospekt "Multikonductor" der Fa. AKAPP ist eine Streckeneinspeisung für Schleifleitungen bekannt, die im Innern eines PVC-Gehäuses in Längsrichtung angeordnete Stromschienen aufweist. Im Bereich der Einspeisung sind dazu an den Stromschienen Anschlußklemmen angeordnet, die durch eine Öffnung im Gehäuse nach außen geführt sind. Jede Anschlußklemme und damit jede Stromschiene ist mit einer Ader eines Stromversorgungskabels elektrisch leitend verbunden. Der Einspeisungsbereich ist durch eine zusätzliche Gehäuseabdeckung geschützt, die den Einspeisungsbereich gleichzeitig nach außen elektrisch isoliert. Das mehradrige Stromversorgungskabel ist durch die Gehäuseabdeckung hindurchgeführt und kann an dieser befestigt sein.

Nachteilig bei dieser Stromeinspeisung ist die relativ breitbauende Ausführung, die sich insbesondere beim Verlegen mehrerer Schleifleitungen nebeneinander als sehr ungünstig erwiesen hat. Außerdem ist diese Streckeneinspeisung montageunfreundlich, da die relativ dicken Adern des Stromversorgungskabels stark verbogen werden müssen, um sie mit den Anschlußklemmen zu verbinden.

Die Aufgabe der Erfindung ist es, eine Stromeinspeisung zu schaffen, die schmalbauend ausgeführt ist und darüber hinaus die Montage wesentlich vereinfacht.

Die Lösung dieser Aufgabe ist erfindungsgemäß durch die im Anspruch 1 angegebenen Merkmale gegeben. Durch die kennzeichnenden Merkmale der Unteransprüche 2 bis 10 ist die Stromeinspeisung in vorteilhafterweise weiter ausgestaltet.

Die Erfindung sieht vor, daß die elektrisch leitende Verbindung zwischen jeweils einer der Adern des oberhalb des Kunststofflängsprofils angeordneten und endenden Stromversorgungskabels und jeweils einer der Stromschienen als eine flache, mit einer der beiden Flachseiten der zugehörigen äußeren Seitenfläche des Kunststofflängsprofils zugewandten und an dieser mindestens teilweise anliegenden Anschlußfahne ausgebildet ist, die sich innerhalb der Abdeckung ausgehend von der Stromschiene vertikal nach oben bis in den Bereich oberhalb des Kunststofflängsprofils erstreckt. Die flache Anschlußfahne ermöglicht es, die Anschlußklemme in den Bereich oberhalb des Kunststofflängsprofils zu verlegen, so daß die Stromeinspeisung sehr schmalbauend ausgeführt werden kann. Weiter ergibt sich als Vorteil, daß die Adern des Stromversorgungskabels zur Verbindung mit der jeweiligen Anschlußfahne nicht verbogen werden müssen, sondern nur ein Spreizen der Adern erforderlich ist.

Der Montageaufwand vereinfacht sich weiter, wenn das untere Ende der Anschlußfahne nach Art eines L einen in Schleifleitungsrichtung verlaufenden Schenkel aufweist, der elektrisch leitend flächig an die Außenfläche der Stromschiene anlegbar ist. Eine derartige Ausgestaltung der Anschlußfahne stellt einen großflächigen Kontakt mit der Stromschiene her und ist darüber hinaus einfach zu montieren.

Die L-förmige Ausführung ermöglicht es, daß der Schenkel auf einfache Weise an einer die Stromschiene umgreifenden U-förmigen Klemme gehalten ist.

Weiter wird vorgeschlagen, daß der Schenkel von einer sich quer zur Schleifleitungsrichtung erstreckenden Schraube, die sich auf der dem Kunststofflängsprofil abgewandten Seite der Klemme abstützt, an die Stromschiene anpreßbar ist. Dies hat den Vorteil, daß die Klemme vormontiert werden kann und daß danach eine einfache und sichere Verbindung herstellbar ist.

Weiter wird zur Vereinfachung der Montage vorgeschlagen, daß der Schenkel in eine seitliche Öffnung der Klemme einsteckbar ist.

Am oberen Ende der Anschlußfahne ist eine Kabelanschlußklemme zur elektrisch leitenden Befestigung einer Ader angeordnet, um die Adern vor Ort mit wenigen Handgriffen mit der Anschlußfahne zu verbinden.

Zur Verringerung des Herstellungsaufwandes für die Abdeckung wird vorgeschlagen, daß die Abdeckung nach Art einer Verbindungsmuffe ausgebildet ist, deren in Schleifleitungslängsrichtung beabstandete, den Einspeisungsbereich einschließende Enden das Kunststofflängsprofil formschlüssig umfaßt. Auch diese Weise ist eine Abdeckung aus wenigen Teilen herstellbar, die darüber hinaus vor Ort leicht zu montieren sind.

Weiter wird vorgeschlagen, daß das in Schleifleitungslängsrichtung geteilte Mittelteil der Abdeckung aus zwei an den Enden verrastbaren identischen Hälften gebildet ist.

Außerdem ist das Mittelteil beidendig mit den identischen Enden verbindbar. Auf diese Weise verringert sich die Teilezahl weiter und der Montageaufwand nimmt ab.

Zur Vereinfachung der Montage wird vorgeschlagen, daß die lösbare Verbindung der Mittelteile mit den Enden durch Rastelemente herstellbar ist.

Ein Ausführungsbeispiel der Erfindung ist in der Zeichnung dargestellt und wird nachfolgend näher beschrieben. Es zeigen:
- Fig. 1: eine räumliche Darstellung einer abgedeckten Stromeinspeisung mit entferntem halben Mittelteil der Abdeckung,
- Fig. 2: einen Querschnitt durch die Schleifleitung im Einspeisungsbereich gemäß Fig. 1,
- Fig. 3: eine mit einer Stromschiene mittels einer Klemme verbundene Anschlußfahne mit einem Stromschienenteilstück,
- Fig. 4: eine vergrößerte Darstellung mit den Anschlußklemme sowie einem mit einem Ende verrasteten Mittelteil,
- Fig. 5: die Verrastung gemäß Fig. 4 mit einem Schnappelement und
- Fig. 6: eine Darstellung wie in Figur 1, jedoch mit vollständiger Abdeckung der Stromeinspeisung.

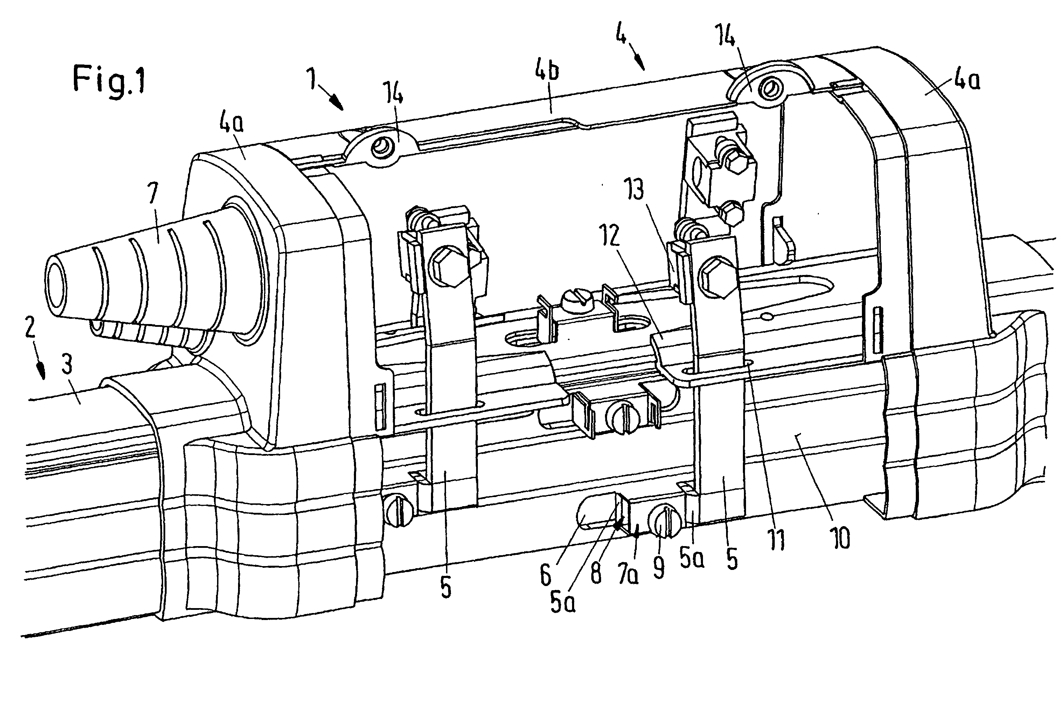

Fig. 1 zeigt eine räumliche Darstellung einer Stromeinspeisung 1 für eine Schleifleitung 2, die unten längsgeschlitzt ist und im Innern des als Kunststofflängsprofils 3 ausgebildeten Schleifleitungsgehäuses Stromschienen 6 aufweist, die in Schleifleitungslängsrichtung parallel zu dieser ausgerichtet sind. Die Stromeinspeisung ist im Einspeisungsbereich mit einer gehäuseartigen Abdeckung 4 versehen, die aus den beiden Enden 4a und Mittelteilen 4b gebildet ist, wobei die Mittelteile 4b mit den Enden 4a zur Herstellung einer lösbaren Verbindung verrastbar sind.

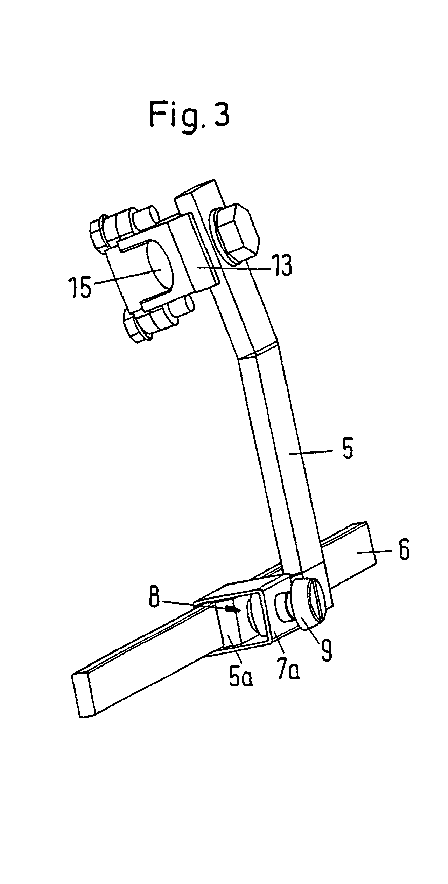

In Fig. 1 ist das vordere Mittelteil 4b abgenommen, so daß an der Schleifleitung 2 angeordnete Anschlußfahnen 5 sichtbar sind, die innerhalb der Abdeckung 4 jeweils ausgehend von einer der Stromschienen 6 vertikal nach oben geführt sind und sich dabei bis in den Bereich oberhalb des Kunststofflängsprofils 3 erstrecken, wobei deren unteres Ende mit der Stromschiene 6 und deren oberes Ende mit einer der Adem eines mehrarmigen Stromversorgungskabels elektrisch leitend verbindbar ist. Die Anschlußfahnen 5 dienen also als elektrisch leitende Verbindungen zwischen jeweils einer der Adern und jeweils einer der Stromschienen 6, wobei das Stromversorgungskabel oberhalb des Kunststofflängsprofils 3 angeordnet ist und innerhalb der Abdeckung 4 endet. Das Stromversorgungskabel ist in Fig. 1 nicht dargestellt; lediglich zwei Kabeltüllen 7 sind gezeigt, die durch einfaches Abschneiden individuell an unterschiedliche Kabeldurchmesser anpaßbar sind. Durch die Kabeltüllen 7 hindurch ist das Stromversorgungskabel in den durch die Abdeckung 4 oberhalb des Kunststofflängsprofils 3 gebildeten Innenraum geführt, und zwar durch herausbrechbare Durchführungsöffnungen, die ansonsten wasserdicht schließen. Die Anschlußfahnen 5 sind als Flachdraht mit rechteckigem Querschnitt ausgebildet, wobei das untere Ende der Anschlußfahnen 5 nach Art eines "L" einen in Schleifleitungslängsrichtung verlaufenden Schenkel 5a aufweist. Der Schenkel 5a liegt jeweils elektrisch leitend flächig an der Außenfläche der Stromschiene 6 an und wird von einer die Stromschiene 6 umgreifenden U-förmigen Klemme 7a gehalten (s. Fig. 3). Die Klemmen 7a sind in Schleifleitungslängsrichtung gesehen vorn und hinten geöffnet (Öffnung 8), wobei der Schenkel 5a in die Klemme 7a einsteckbar ist. Mittels einer Schraube 9 ist der Schenkel 5a an die Stromschiene 6 anpreßbar. Die Schraube 9 erstreckt sich quer zur Schleifleitungsrichtung und stützt sich auf der dem Kunststofflängsprofil 3 abgewandten Seite der Klemme 7a an einem dafür vorgesehenen Gewinde ab. Gehalten werden die Anschlußfahnen 5 durch Längsschlitze 11, die an Verlängerungen 12 der Enden 4a ausgebildet sind, welche sich in den Einspeisungsbereich hinein erstrecken. Die Anschlußfahnen 5 werden vor der Montage durch diese Längsschlitze 11 hindurch gesteckt. An ihrem oberen Ende weisen die Anschlußfahnen jeweils eine Kabelanschlußklemme 13 zur elektrisch leitenden Befestigung einer der Adern auf.

Die Abdeckung 4 ist nach Art einer Verbindungsmuffe ausgebildet, deren Enden 4a in Schleifleitungsrichtung beabstandet sind und den Einspeisungsbereich einschließen. Die Enden 4a umfassen formschlüssig das Kunststofflängsprofil 3. Fig. 1 zeigt, daß das Mittelteil 4b der Abdeckung 4 in Schleifleitungslängsrichtung geteilt ist, also aus zwei identischen Hälften besteht, die an dem Hinterschnitt 13a der Enden 4a verrastbar sind. Dadurch läßt sich die Einspeisung mit einem Mittelteil 4b vormontieren und gegen herunterfallen sichern. Zusätzlich werden die Hälften 4b oben miteinander verschraubt, und zwar an speziellen Vorsprüngen 14. Somit besteht die Abdeckung 4 nur aus zwei Gehäuseteilen 4a, 4b, die jeweils paarweise angeordnet die Abdeckung 4 bilden.

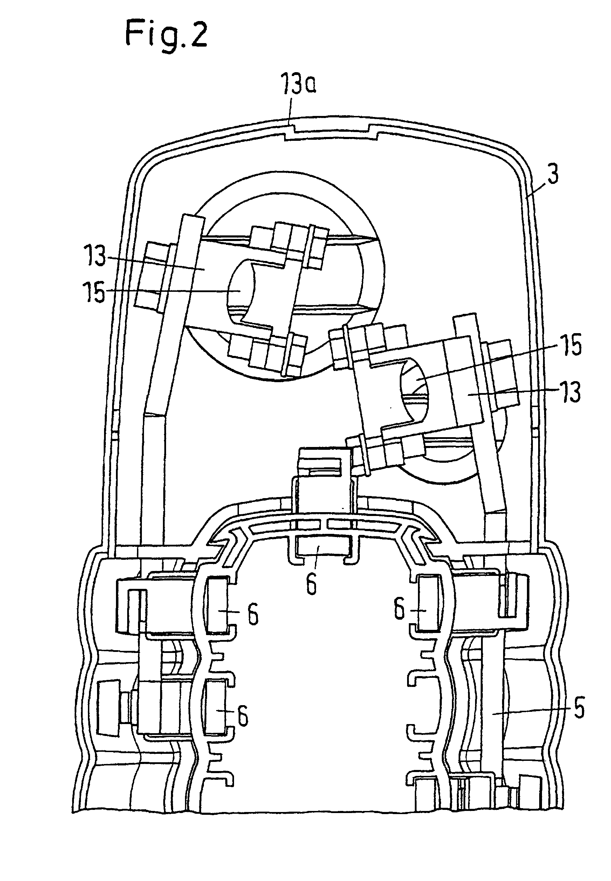

Fig. 2 zeigt einen Querschnitt durch den Einspeisungsbereich 1. Sehr gut sind dabei die flachen Anschlußfahnen 5 zu erkennen. Die spezielle Ausbildung der Kabelanschlußklemmen 13 gestattet es, in die Öffnungen 15 jeweils eine Ader des Stromversorgungskabels einzustecken und anschließend die Kabelanschlußklemmen 13 anzuziehen. Die Adern verlaufen hierbei im wesentlichen in Schleifleitungslängsrichtung, so daß sie bei der Montage nur geringfügig auseinander gebogen werden müssen.

Fig. 3 zeigt die aus der Stromeinspeisung 1 herausgenommene Anschlußfahne 5 mit der oberen Kabelanschlußklemme 13 und der unteren Klemme 7a. Sehr gut ist in Fig. 3 der in die Klemme 7a eingesteckte Schenkel 5a zu erkennen, der flächig an der ebenfalls dargestellten Stromschiene 6 mittels der Schraube 9 angepreßt ist.

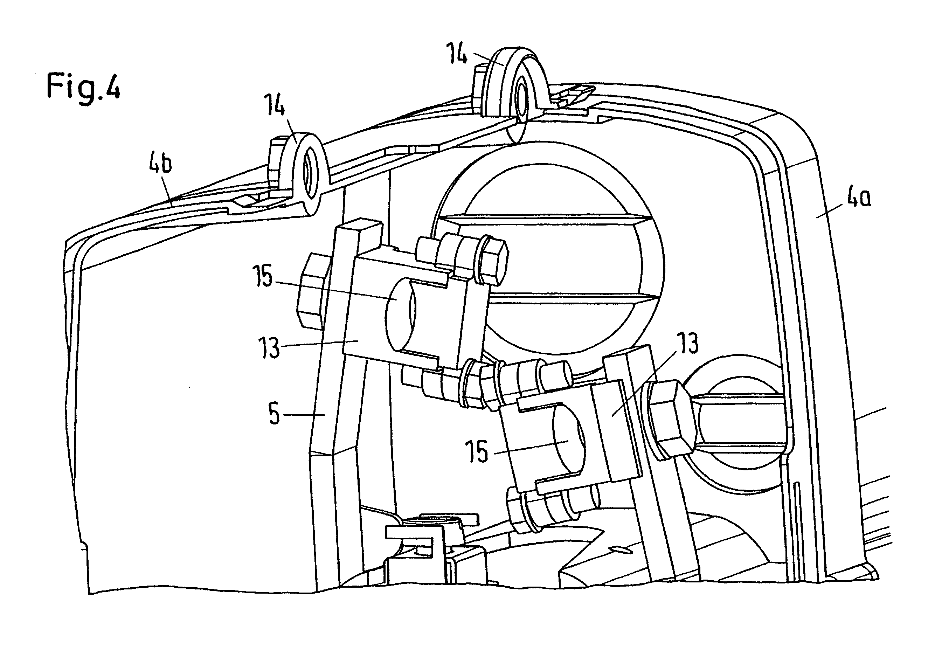

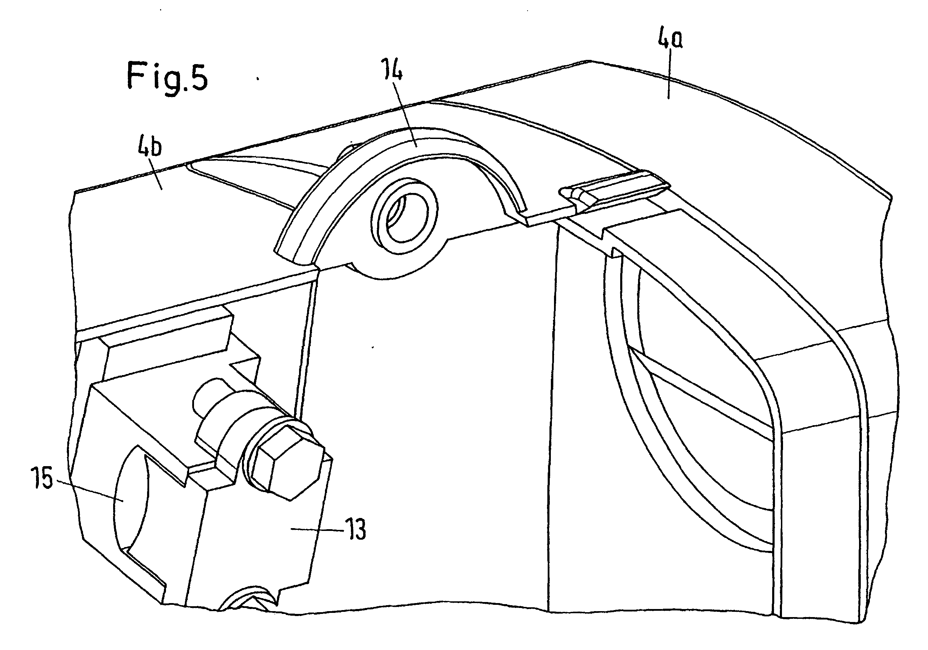

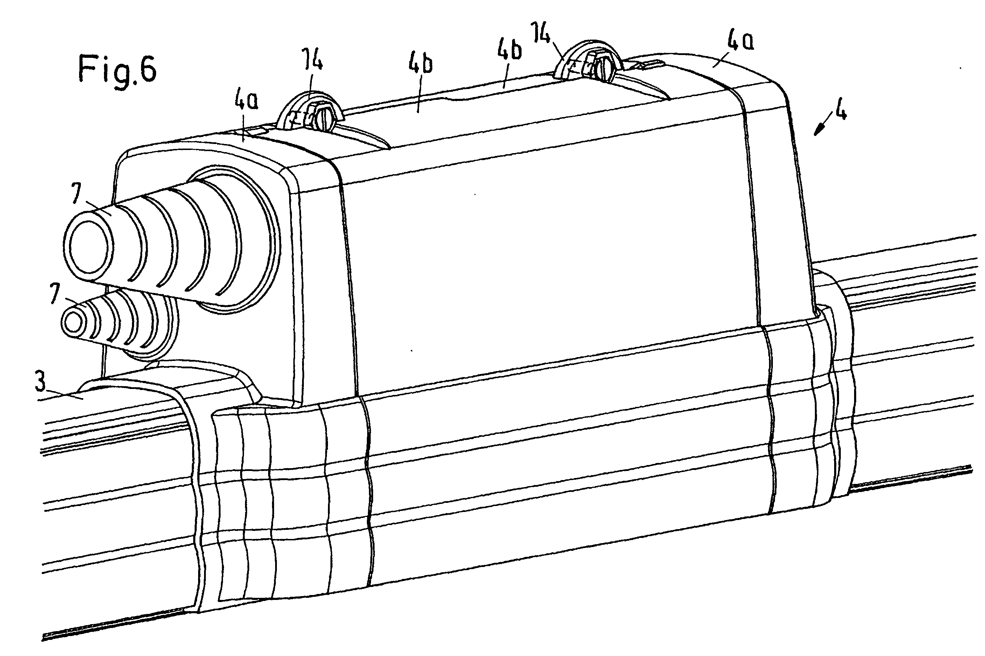

In Fig. 4 sind in vergrößerter Darstellung eine Hälfte 4b des Mittelteils und ein Ende 4a im verrasteten Zustand erkennbar. Wie die Verrastung erfolgt, ist der Fig. 5 entnehmbar. Außerdem zeigt Fig. 5 die Vorsprünge 14. Die montierte Abdeckung 4 des Einspeisungsbereichs ist in Fig. 6 dargestellt.

### Bezugszeichenliste:

- 1: Stromeinspeisung
- 2: Schleifleitung
- 3: Kunststofflängsprofil
- 4: Abdeckung
- 4a: Ende
- 4b: Mittelteil
- 5: Anschlußfahne
- 5a: Schenkel
- 6: Stromschiene
- 7: Kabeltülle
- 7a: Klemme
- 8: Öffnung
- 9: Schraube
- 10: Seitenfläche
- 11: Längsschlitze
- 12: Verlängerung
- 13: Kabelanschlußklemme
- 13a: Hinterschnitt
- 14: Vorsprung
- 15: Öffnung

## Patentansprüche

1. Stromeinspeisung für längsgeschlitzte Schleifleitungen (2), die im Innern eines Kunststofflängsprofils (3) in Schleifleitungslängsrichtung angeordnete Stromschienen (6) aufweisen,
mit mindestens einer im Einspeisungsbereich an jeder Stromschiene angeordneten, mit dieser durch eine Öffnung im Kunststofflängsprofil elektrisch leitend verbundenen Anschlußklemme (7), die mit einer der Adern eines Stromversorgungskabels verbindbar ist und
mit einer den Einspeisungsbereich nach Außen elektrisch isolierenden gehäuseartigen Abdeckung (4), durch die das mehradrige Stromversorgungskabel hindurchgeführt ist,
**dadurch gekennzeichnet,**
**dass** die elektrisch leitende Verbindung zwischen jeweils einer der Adern des oberhalb des Kunststofflängsprofils (3) angeordneten und endenden Stromversorgungskabels und jeweils einer der Stromschienen (6) als eine flache, mit einer der beiden Flachseiten der zugehörigen äußeren Seitenfläche (10) des Kunststofflängsprofils (3) zugewandten und an dieser mindestens teillweise anliegenden Anschlußfahne (5) ausgebildet ist, die sich innerhalb der Abdeckung (4) ausgehend von der Stromschiene (6) vertikal nach oben bis in den Bereich oberhalb des Kunststofflängsprofils (3) erstreckt.

2. Stromeinspeisung nach Anspruch 1,
**dadurch gekennzeichnet,**
**dass** das untere Ende der Anschlußfahne (5) nach Art eines L einen in Schleifleitungslängsrichtung verlaufenden Schenkel (5a) aufweist, der elektrisch leitend flächig an die Stromschiene (6) anlegbar ist.

3. Stromeinspeisung nach Anspruch 2,
**dadurch gekennzeichnet,**
**dass** der Schenkel (5a) von einer die Stromschiene (6) umgreifenden U-förmigen Klemme (7a) gehalten ist.

4. Stromeinspeisung nach einem der Ansprüche 1 oder 3,
**dadurch gekennzeichnet,**
**dass** der Schenkel (5a) von einer sich quer zur Schleifleitungslängsrichtung erstreckenden Schraube (9), die sich auf der dem Kunststofflängsprofil (3) abgewandten Seite der Klemme (7a) abgestützt, an die Stromschiene (6) anpreßbar ist.

5. Stromeinspeisung nach einem der Ansprüche 2 bis 4,
**dadurch gekennzeichnet,**
**dass** der Schenkel (5a) in eine seitliche Öffnung (8) der Klemme (7a) einsteckbar ist.

6. Stromeinspeisung nach einem der Ansprüche 1 bis 5,
**dadurch gekennzeichnet,**
**dass** am oberen Ende der Anschlußfahne (5) eine Kabelanschlußklemme (13) zur elektrisch leitenden Befestigung einer Ader angeordnet ist.

7. Stromeinspeisung nach einem der Ansprüche 1 bis 6,
**dadurch gekennzeichnet,**
**dass** die Abdeckung (4) nach Art einer Verbindungsmuffe ausgebildet ist, deren in Schleifleitungslängsrichtung beabstandete, den Einspeisungsbereich einschließende Enden (4a) das Kunststofflängsprofil (3) formschlüssig umfaßt.

8. Stromeinspeisung nach einem der Ansprüche 1 bis 7,
**dadurch gekennzeichnet,**
**dass** das in Schleifleitungslängsrichtung geteilte Mittelteil (4b) den Abdeckung (4) aus zwei an den Enden (4a) verrastbaren identischen Hälften gebildet ist.

9. Stromeinspeisung nach einem der Ansprüche 1 bis 8,
**dadurch gekennzeichnet,**
**dass** das Mittelteil (4b) beidendig mit den identischen Enden (4a) verbindbar ist.

10. Stromeinspeisung nach einem der Ansprüche 1 bis 9,
**dadurch gekennzeichnet,**
**dass** die lösbare Verbindung der Mittelteile (4b) mit den Enden (4a) durch Rastelemente herstellbar ist.

## Claims

1. Electric power supply for longitudinally slotted current collector lines (2), which have contact rails arranged in the interior of an elongate plastic profile (3) in the direction of the current collector line, including at least one connecting terminal (7), which is arranged on each contact rail in the power supply region and is electrically conductively connected to it through an opening in the elongate plastic profile and which is connectable to one of the cores of a power supply cable and including a housing-like cover (4), which electrically insulates the power supply region from the exterior and through which the multi-core power supply cable passes, **characterised in that** the electrically conductive connection between each of the cores of the power supply cable, which is arranged and terminates above the elongate plastic profile (3) and a respective one of the contact rails (6) is constructed in the form of a flat connecting lug (5), which is directed with one of the two flat sides towards the associated outer side surface (10) of the elongate plastic profile (3) and at least partially engages the latter and which extends within the cover (4), starting from the contact rail (6), vertically upwards into the region above the elongate plastic profile (3).

2. Electric power supply as claimed in Claim 1, **characterised in that** the lower end of the connecting lug (5) has a limb (5a) extending in the direction of the current collector line in the manner of an L, which may be electrically conductively engaged flat against the contact rail (6).

3. Electric power supply as claimed in Claim 2, **characterised in that** the limb (5a) is held by a U-shaped clip (7a) engaging around the contact rail (6).

4. Electric power supply as claimed in one of Claims 1 or 3, **characterised in that** the limb (5a) may be pressed against the contact rail (6) by a screw (9), which extends transverse to the direction of the current collector line and bears against the side of the clip (7a) remote from the elongate plastic profile (3).

5. Electric power supply as claimed in one of Claims 2 to 4, **characterised in that** the limb (5a) is insertable into a lateral opening (8) in the clip (7a).

6. Electric power supply as claimed in one of Claims 1 to 5, **characterised in that** a cable connecting terminal (13) for electrically conductively securing a core is disposed at the upper end of the connecting lug.

7. Electric power supply as claimed in one of Claims 1 to 6, **characterised in that** the cover (4) is constructed in the manner of a connecting sleeve, whose ends (4a), which are spaced in the direction of the current collector line and enclose the power supply region, form-lockingly surround the elongate plastic profile (3).

8. Electric power supply as claimed in one of Claims 1 to 7, **characterised in that** the central portion (4b), which is divided in the direction of the current collector line, of the cover (4) is constituted by two identical halves which are lockable at their ends (4a).

9. Electric power supply as claimed in one of Claims 1 to 8, **characterised in that** the central portion (4b) is connectable at both ends to the identical ends (4a).

10. Electric power supply as claimed in one of Claims 1 to 9, **characterised in that** the releasable connection of the central portions (4b) to the ends (4a) may be produced by locking elements.

## Revendications

1. Alimentation en courant pour des lignes de contact (2) fendues longitudinalement qui comportent à l'intérieur d'un profilé longitudinal (3) en matière plastique des barres conductrices (6) disposées dans la direction longitudinale des lignes de contact, comportant
au moins une borne d'alimentation (7) disposée dans la région d'alimentation sur chaque barre conductrice et reliée électriquement à celle-ci par une ouverture ménagée dans le profilé longitudinal en matière plastique, laquelle borne d'alimentation peut être reliée à l'un des conducteurs d'un câble d'alimentation en courant et
un revêtement (4) isolant électriquement de l'extérieur la région d'alimentation, lequel est traversé par le câble d'alimentation en courant multibrins,
**caractérisée en ce que** la liaison électroconductrice entre l'un des conducteurs du câble d'alimentation en courant, disposé et se terminant au-dessus du profilé longitudinal (3) en matière plastique, et l'une des barres conductrices (6) est conformée en une barrette (5) plate dont l'une des deux faces plates est dirigée vers la face latérale extérieure associée (10) du profilé longitudinal (3) en matière plastique sur lequel elle porte au moins partiellement et qui s'étend à l'intérieur du revêtement (4) verticalement vers le haut depuis la barre conductrice (6) jusque dans la région au-dessus du profilé (3) en matière plastique.

2. Alimentation en courant selon la revendication 1, **caractérisée en ce que** l'extrémité inférieure de la barrette (5) en forme de L comporte une branche (5a), s'étendant dans la direction longitudinale des lignes de contact, qui peut s'appuyer à plat sur la barre conductrice (6) en réalisant une liaison électrique.

3. Alimentation en courant selon la revendication 2, **caractérisée en ce que** la branche (5a) est maintenue par une pince (7a) en forme de U entourant la barre conductrice (6).

4. Alimentation en courant selon l'une des revendications 1 ou 3, **caractérisée en ce que** la branche (5a) peut être pressée sur la barre conductrice (6) par une vis (9) qui s'étend transversalement à la direction longitudinale des lignes de contact et qui s'appuie sur le côté de la pince (7a) qui est opposé au profilé longitudinal (3) en matière plastique.

5. Alimentation en courant selon l'une des revendications 2 à 4, **caractérisée en ce que** la branche (5a) est enfichable dans une ouverture latérale (8) de la pince (7a).

6. Alimentation en courant selon l'une des revendications 1 à 5, **caractérisée en ce qu'**une pince de raccordement de câble (13) est disposée à l'extrémité supérieure de la barrette (5) en vue de fixer un conducteur tout en maintenant une liaison électrique.

7. Alimentation en courant selon l'une des revendications 1 à 6, **caractérisée en ce que** le revêtement (4) est conformé en manchon de liaison dont les extrémités (4a), distantes dans la direction longitudinale des lignes de contact et enfermant la région d'alimentation, enserrent le profilé longitudinal (3) en matière plastique par complémentarité de forme.

8. Alimentation en courant selon l'une des revendications 1 à 7, **caractérisée en ce que** la partie médiane (4b), divisée dans la direction longitudinale des lignes de contact, du revêtement (4) est formée de deux moitiés identiques encliquetables aux extrémités (4a).

9. Alimentation en courant selon l'une des revendications 1 à 8, **caractérisée en ce que** les deux extrémités de la partie médiane (4b) peuvent être reliées aux extrémités identiques (4a).

10. Alimentation en courant selon l'une des revendications 1 à 9, **caractérisée en ce que** la liaison amovible des parties médianes (4b) aux extrémités (4a) peut être réalisée par des éléments d'encliquetage.
